# EUROPEAN PATENT APPLICATION

(11) **EP 4 510 570 A1**
(43) Date of publication of application: **19.02.2025**
(21) Application number: 23788586.8
(22) Date of filing: 12.04.2023
(51) Int. Cl.: H04N 19/119, H04N 19/132, H04N 19/105, H04N 19/593, H04N 19/157, H04N 19/176

(54) **IMAGE ENCODING/DECODING METHOD FOR GEOMETRIC PARTITIONED BLOCK, METHOD FOR TRANSMITTING BITSTREAM, AND RECORDING MEDIUM STORING BITSTREAM**

(30) Priority: 12.04.2022 US 202263330255 P
(71) Applicant: LG Electronics Inc., Yeongdeungpo-gu Seoul 07336 (KR)
(72) Inventor: JANG, Hyeong Moon, Seoul 06772 (KR); NAM, Jung Hak, Seoul 06772 (KR)
(74) Representative: Frenkel, Matthias Alexander
(86) International application number: PCT/KR2023/004914
(87) International publication number: WO 2023/200237

(57) **Abstract**

An image encoding/decoding method, a method of transmitting a bitstream and a computer-readable recording medium storing a bitstream are provided. The image decoding method performed by an image decoding apparatus may comprise determining whether to apply geometric partitioning to a current block, partitioning the current block into a firs sub-block and a second sub-block based on geometric partitioning being applied to the current block, and performing intra prediction on the first sub-block and performing inter prediction on the second sub-block. An intra prediction mode of the first sub-block may be derived based on an intra prediction mode of a collocated block within a reference block and whether to resample the reference picture.

## Description

### Technical Field

The present disclosure relates to an image encoding/decoding method for a geometrically partitioned block, a method of transmitting a bitstream, and a recording medium storing the bitstream. More specifically, the present disclosure relates to a method of considering whether to resample a reference sample during intra and inter prediction (GPM intra/inter) for a geometrically partitioned block.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, an object of the present disclosure is to provide a method of performing geometric partitioning intra/inter (GPM intra/inter) prediction.

In addition, an object of the present disclosure is to provide a method of deriving an intra prediction mode based on a reference picture of an inter prediction block when performing geometric partitioning intra/inter prediction.

In addition, an object of the present disclosure is to provide a method of deriving an intra prediction mode based on whether to resample a reference picture of an inter prediction block when performing geometric partitioning intra/inter prediction.

An object of the present disclosure is to provide a non-transitory recording medium storing a bitstream generated by an image encoding method according to the present disclosure.

An object of the present disclosure is to provide a non-transitory recording medium storing a bitstream received, decoded and used to reconstruct an image by an image decoding apparatus according to the present disclosure.

An object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

### Technical Solution

An image decoding method according to an aspect of the present disclosure may comprise determining whether to apply geometric partitioning to a current block, partitioning the current block into a firs sub-block and a second sub-block based on geometric partitioning being applied to the current block, and performing intra prediction on the first sub-block and performing inter prediction on the second sub-block. An intra prediction mode of the first sub-block may be derived based on an intra prediction mode of a collocated block within a reference block and whether to resample the reference picture

According to an aspect of the present disclosure, based on the reference picture being resampled, the collocated block may be derived based on a value clipped to a position within a certain range for the current block.

According to an aspect of the present disclosure, the position within the certain range for the current block may be determined based on a coding tree unit size for the current block.

According to an aspect of the present disclosure, based on the reference picture being resampled, the collocated block may be derived based on scaling according to a sampling ratio of the reference picture.

According to an aspect of the present disclosure, the collocated block may be derived by being transformed into an integer pixel position after scaling.

According to an aspect of the present disclosure, based on the reference picture being resampled, the intra prediction mode of the first sub-block may be derived based on a specific intra prediction mode.

According to an aspect of the present disclosure, the specific intra prediction mode may be one of planar or DC mode.

According to an aspect of the present disclosure, based on the second sub-block being bi-predicted and at least one of the reference pictures being resampled, the intra prediction mode of the first sub-block may be derived based on a specific intra prediction mode.

According to an aspect of the present disclosure, based on the second sub-block being bi-predicted and only one of the reference pictures being not resampled, the intra prediction mode of the first sub-block may be derived based on an intra prediction mode of a collocated block within the reference picture which is not resampled and a specific intra prediction mode.

An image encoding method according to another aspect of the present disclosure may comprise determining whether to apply geometric partitioning to a current block, partitioning the current block into a firs sub-block and a second sub-block based on geometric partitioning being applied to the current block, and performing intra prediction on the first sub-block and performing inter prediction on the second sub-block. An intra prediction mode of the first sub-block may be derived based on an intra prediction mode of a collocated block within a reference block and whether to resample the reference picture.

A computer-readable recording medium according to another aspect of the present disclosure may store a bitstream generated by an image encoding method or apparatus of the present disclosure.

A transmission method according to another aspect of the present disclosure may transmit a bitstream generated by an image encoding method or apparatus of the present disclosure.

The features briefly summarized above with respect to the present disclosure are merely exemplary aspects of the detailed description below of the present disclosure, and do not limit the scope of the present disclosure.

### Advantageous Effects

According to the present disclosure, it is possible to provide an image encoding/decoding method and apparatus with improved encoding/decoding efficiency.

In addition, according to the present disclosure, it is possible to provide a method of performing geometric partitioning intra/inter prediction.

In addition, according to the present disclosure, it is possible to provide a method of deriving an intra prediction mode based on a reference picture when performing geometric partitioning intra/inter prediction.

In addition, according to the present disclosure, it is possible to provide a method of deriving an intra prediction mode based on whether to resample a reference picture when performing geometric partitioning intra/inter prediction.

In addition, according to the present disclosure, it is possible to provide a method of deriving an intra prediction mode based on a reference picture when performing geometric partitioning intra/inter prediction.

In addition, according to the present disclosure, it is possible to provide a method of enabling intra/inter prediction information of a current block to be referenced in a block and picture decoded after the current block when applying geometric partitioning intra/inter prediction.

In addition, according to the present disclosure, it is possible to provide a method of improving image quality when performing geometric partitioning intra/inter prediction.

In addition, according to the present disclosure, a non-transitory computer-readable recording medium for storing a bitstream generated by an image encoding method according to the present disclosure can be provided.

According to the present disclosure, it is possible to provide a non-transitory recording medium storing a bitstream received, decoded and used to reconstruct an image by an image decoding apparatus according to the present disclosure.

According to the present disclosure, it is possible to provide a method of transmitting a bitstream generated by an image encoding method according to the present disclosure.

It will be appreciated by persons skilled in the art that that the effects that can be achieved through the present disclosure are not limited to what has been particularly described hereinabove and other advantages of the present disclosure will be more clearly understood from the detailed description.

### Description of Drawings

FIG. 1 is a view schematically showing a video coding system, to which an embodiment of the present disclosure is applicable.
FIG. 2 is a view schematically showing an image encoding apparatus, to which an embodiment of the present disclosure is applicable.
FIG. 3 is a view schematically showing an image decoding apparatus, to which an embodiment of the present disclosure is applicable.
FIG. 4 is a diagram schematically showing an inter prediction unit of an image encoding apparatus.
FIG. 5 is a flowchart illustrating a method of encoding an image based on inter prediction.
FIG. 6 is a diagram schematically showing an inter prediction unit of an image decoding apparatus.
FIG. 7 is a flowchart illustrating a method of decoding an image based on inter prediction.
FIG. 8 is a flowchart illustrating an inter prediction method.
FIG. 9 is a diagram illustrating GPM (Geometric Partitioning Mode) partitioning according to the present disclosure.
FIG. 10 is a diagram illustrating GPM intra/inter according to the present disclosure.
FIG. 11 is a diagram illustrating a method of deriving an intra prediction mode of a geometrically partitioned block based on whether to resample a reference picture of the present disclosure.
FIG. 12 is a diagram illustrating a method of deriving an intra prediction mode of a geometrically partitioned block when reference picture resampling is applied according to an embodiment of the present disclosure
FIG. 13 is a diagram illustrating a method of deriving an intra prediction mode of a geometrically partitioned block when reference picture resampling is applied according to another embodiment of the present disclosure.
FIG. 14 is a flowchart illustrating a method of deriving an intra prediction mode of a geometrically partitioned block based on a reference sample resampling scaling ratio according to an embodiment of the present disclosure.
FIG. 15 is a flowchart illustrating a method of deriving an intra prediction mode of a geometrically partitioned block based on a reference sample resampling scaling ratio according to another embodiment of the present disclosure.
FIG. 16 is a flowchart illustrating a method of deriving an intra prediction mode of a geometrically partitioned block based on a reference sample resampling scaling ratio according to another embodiment of the present disclosure.
FIG. 17 is a flowchart illustrating an image encoding method or decoding method according to one embodiment of the present disclosure.
FIG. 18 is a view illustrating a content streaming system to which an embodiment of the present disclosure is applicable.

### Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

### Overview of video coding system

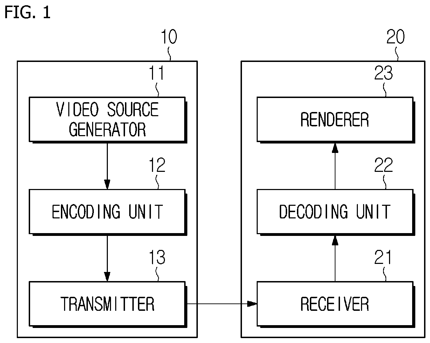

FIG. 1 is a view showing a video coding system to which an embodiment according to the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit 12 and a transmitter 13. The decoding apparatus 20 according to an embodiment may include a receiver 21, a decoding unit 22 and a renderer 23. The encoding unit 12 may be called a video/image encoding unit, and the decoding unit 22 may be called a video/image decoding unit. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 10, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

### Overview of image encoding apparatus

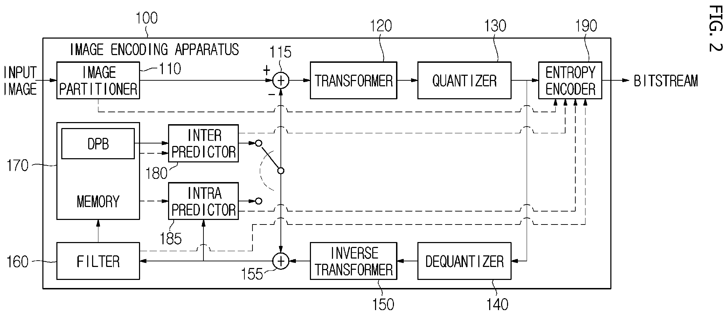

FIG. 2 is a view schematically showing an image encoding apparatus, to which an embodiment of the present disclosure is applicable.

As shown in FIG. 2, the image source device 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image source device 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image source device 100 into one or more processing units. For example, the processing unit may be called a coding unit (CU). The coding unit may be obtained by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth obtained by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform obtained based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image source device 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image source device 100, prediction mismatch between the image source device 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

### Overview of image decoding apparatus

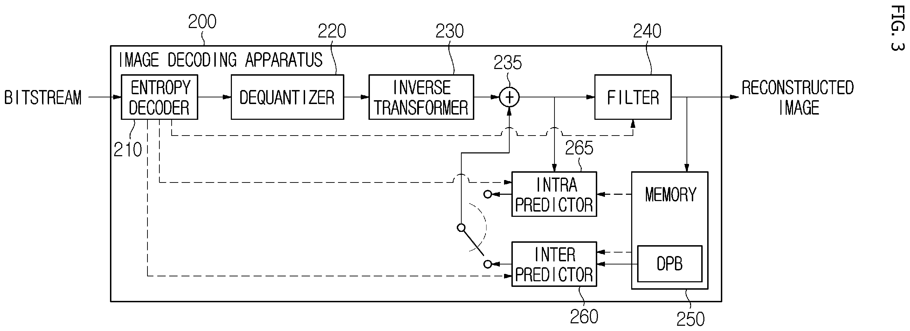

FIG. 3 is a view schematically showing an image decoding apparatus, to which an embodiment of the present disclosure is applicable.

As shown in FIG. 3, the image reception device 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image reception device 200 may be configured by a hardware component (e.g., a decoder or a processor) according to an embodiment. In addition, the memory 250 may include a decoded picture buffer (DPB) or may be configured by a digital storage medium.

The image reception device 200, which has received a bitstream including video/image information, may reconstruct an image by performing a process corresponding to a process performed by the image source device 100 of FIG. 2. For example, the image reception device 200 may perform decoding using a processing unit applied in the image encoding apparatus. Thus, the processing unit of decoding may be a coding unit, for example. The coding unit may be obtained by partitioning a coding tree unit or a largest coding unit. The reconstructed image signal decoded and output through the image reception device 200 may be reproduced through a reproducing apparatus (not shown).

The image reception device 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image reception device 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image source device 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image source device 100 may be equally or correspondingly applied to the filter 240, the inter prediction unit 260, and the intra prediction unit 265 of the image reception device 200.

### Inter prediction

The prediction unit of the image encoding apparatus 100 and the image decoding apparatus 200 may derive a prediction sample by performing inter prediction on a per-block basis. Inter prediction can be a prediction derived in a manner that is dependent on data elements (e.g., sample values or motion information) of picture(s) other than the current picture. When inter prediction is applied to a current block, a predicted block (a prediction sample array) for the current block may be derived on the basis of a reference block (a reference sample array) specified by a motion vector on a reference picture indicated by a reference picture index. Herein, in order to reduce the amount of motion information transmitted in the inter prediction mode, the motion information of the current block may be predicted on a per block, subblock, or sample basis on the basis of the correlation of motion information between a neighboring block and the current block. The motion information may include a motion vector and a reference picture index. The motion information may further include inter prediction type (L0 prediction, L1 prediction, Bi prediction, etc.) information. When inter prediction is applied, neighboring blocks may include a spatial neighboring block present in the current picture and a temporal neighboring block present in the reference picture. The reference picture including the reference block and the reference picture including the temporal neighboring block may be the same or different. The temporal neighboring block may be called a collocated reference block or a collocated CU (colCU). The reference picture including the temporal neighboring block may be called a collocated picture (colPic). For example, a motion information candidate list may be constructed on the basis of neighboring blocks of the current block. A flag or index information indicating which candidate is selected (used) to derive a motion vector and/or a reference picture index of the current block may be signaled. Inter prediction may be performed on the basis of various prediction modes. For example, in the case of a skip mode and a merge mode, motion information of a current block may be the same as motion information of a selected neighboring block. In the case of the skip mode, unlike the merge mode, the residual signal may not be transmitted. In the case of a motion information prediction (motion vector prediction, MVP) mode, a motion vector of a selected neighboring block may be used as a motion vector predictor, and a motion vector difference may be signaled. In this case, a motion vector of the current block may be derived using the sum of the motion vector predictor and the motion vector difference.

The motion information may include L0 motion information and/or L1 motion information according to an inter prediction type (L0 prediction, L1 prediction, Bi prediction, etc.). A motion vector in the L0 direction may be called an L0 motion vector or MVL0, and a motion vector in the L1 direction may be called an L1 motion vector or MVL1. The prediction based on the L0 motion vector may be called L0 prediction. The prediction based on the L1 motion vector may be called L1 prediction. The prediction based on both the L0 motion vector and the L1 motion vector may be called bi-prediction. Herein, the L0 motion vector may refer to a motion vector associated with a reference picture list L0 (L0), and the L1 motion vector may refer to a motion vector associated with a reference picture list L1 (L1). The reference picture list L0 may include, as reference pictures, pictures preceding the current picture in terms of output order. The reference picture list L1 may include pictures following the current picture in terms of output order. The preceding pictures may be called forward (reference) pictures, and the following pictures may be called backward (reference) pictures. The reference picture list L0 may further include, as reference pictures, pictures following the current picture in terms of output order. In this case, within the reference picture list L0, the preceding pictures may be indexed first, and the following pictures may be indexed next. The reference picture list L1 may further include, as reference pictures, pictures preceding the current picture in terms of output order. In this case, within the reference picture list1, the following pictures may be indexed first, and the preceding pictures may be indexed next. Herein, the output order may correspond to the picture order count (POC) order.

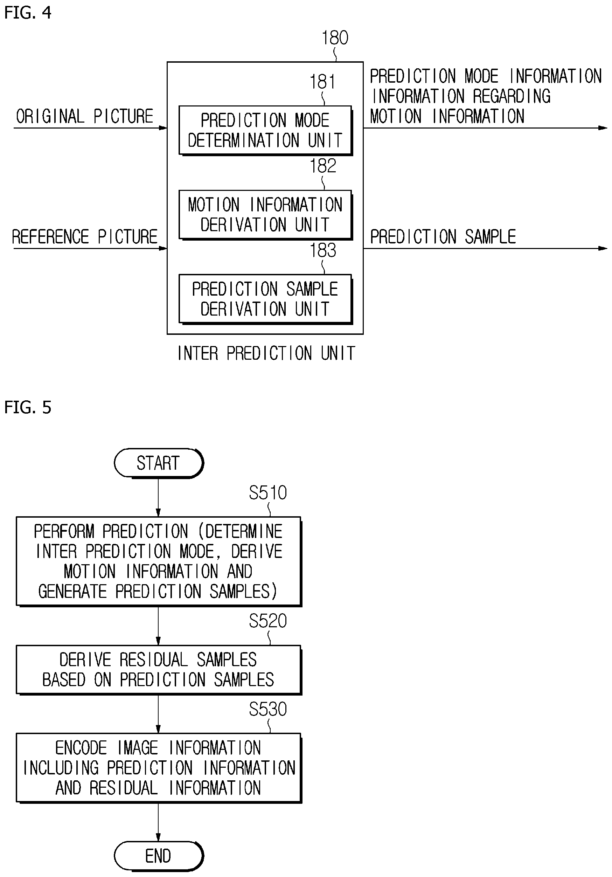

FIG. 4 is a diagram schematically showing the inter prediction unit 180 of the image encoding apparatus 100, and FIG. 5 is a flowchart illustrating a method of encoding an image based on inter prediction.

The image encoding apparatus 100 may perform inter prediction on a current block (S510). The image encoding apparatus 100 may derive an inter prediction mode and motion information of the current block, and may generate prediction samples of the current block. Herein, the procedures of determination of the inter prediction mode, derivation of the motion information, and generation of the prediction samples may be performed simultaneously, or any one procedure may be performed before the other procedures. For example, the inter prediction unit 180 of the image encoding apparatus 100 may include a prediction mode determination unit 181, a motion information derivation unit 182, and a prediction sample derivation unit 183. The prediction mode determination unit 181 may determine the prediction mode for the current block. The motion information derivation unit 182 may derive the motion information of the current block. The prediction sample derivation unit 183 may derive the prediction samples of the current block. For example, the inter prediction unit 180 of the image encoding apparatus 100 may search a predetermined area (search area) of reference pictures for a block similar to the current block through motion estimation, and may derive a reference block of which the difference from the current block is a minimum or less than or equal to a predetermined standard. On the basis of this, a reference picture index indicating the reference picture in which the reference block is located may be derived, and a motion vector may be derived on the basis of the location difference between the reference block and the current block. The image encoding apparatus 100 may determine a mode applied to the current block among various prediction modes. The image encoding apparatus 100 may compare RD costs for the various prediction modes and may determine the optimum prediction mode for the current block.

For example, when the skip mode or the merge mode is applied to the current block, the image encoding apparatus 100 may construct a merge candidate list described later, and may derive a reference block of which the difference from the current block is a minimum or less than or equal to a predetermined standard, among reference blocks indicated by merge candidates included in the merge candidate list. In this case, the merge candidate associated with the derived reference block may be selected, and merge index information indicating the selected merge candidate may be generated and signaled to the decoding apparatus. The motion information of the current block may be derived using the motion information of the selected merge candidate.

As another example, when the (A)MVP mode is applied to the current block, the image encoding apparatus 100 may construct an (A)MVP candidate list described later, and may use, as a motion vector predictor (mvp) of the current block, a motion vector of an mvp candidate selected among mvp candidates included in the (A)MVP candidate list. In this case, for example, a motion vector indicating a reference block derived by the above-described motion estimation may be used as a motion vector of the current block. Among the mvp candidates, an mvp candidate having the motion vector having the minimum difference from the motion vector of the current block may be the selected mvp candidate. A motion vector difference (MVD) that is a difference resulting from subtracting the mvp from the motion vector of the current block may be derived. In this case, information on the MVD may be signaled to the image decoding apparatus 200. In addition, when the (A)MVP mode is applied, a value of the reference picture index may be constructed as reference picture index information and may be separately signaled to the image decoding apparatus 200.

The image encoding apparatus 100 may derive residual samples on the basis of the prediction samples (S520). The image encoding apparatus 100 may compare the prediction samples with the original samples of the current block to derive the residual samples.

The image encoding apparatus 100 may encode image information including prediction information and residual information (S530). The image encoding apparatus 100 may output the encoded image information in the form of a bitstream. The prediction information is pieces of information related to the prediction procedure, and may include prediction mode information (e.g., a skip flag, a merge flag, or a mode index) and information on motion information. The information on the motion information may include candidate selection information (e.g., a merge index, an mvp flag, or an mvp index) that is information for deriving a motion vector. In addition, the information on the motion information may include the information on the MVD and/or the reference picture index information described above. In addition, the information on the motion information may include information indicating whether L0 prediction, L1 prediction, or bi-prediction is applied. The residual information is information on the residual samples. The residual information may include information on quantized transform coefficients for the residual samples.

The output bitstream may be stored in a (digital) storage medium and transmitted to the decoding apparatus, or may be transmitted to the image decoding apparatus 200 over a network.

In the meantime, as described above, the image encoding apparatus 100 may generate a reconstructed picture (including reconstructed samples and a reconstructed block) on the basis of the reference samples and the residual samples. This is to derive the same prediction result by the image encoding apparatus 100 as that performed in the image decoding apparatus 200, and through this, coding efficiency may be increased. Accordingly, the image encoding apparatus 100 may store a reconstructed picture (or reconstructed samples, a reconstructed block) in a memory, and may use the same as a reference picture for inter prediction. As described above, an in-loop filtering procedure may be further applied to the reconstructed picture.

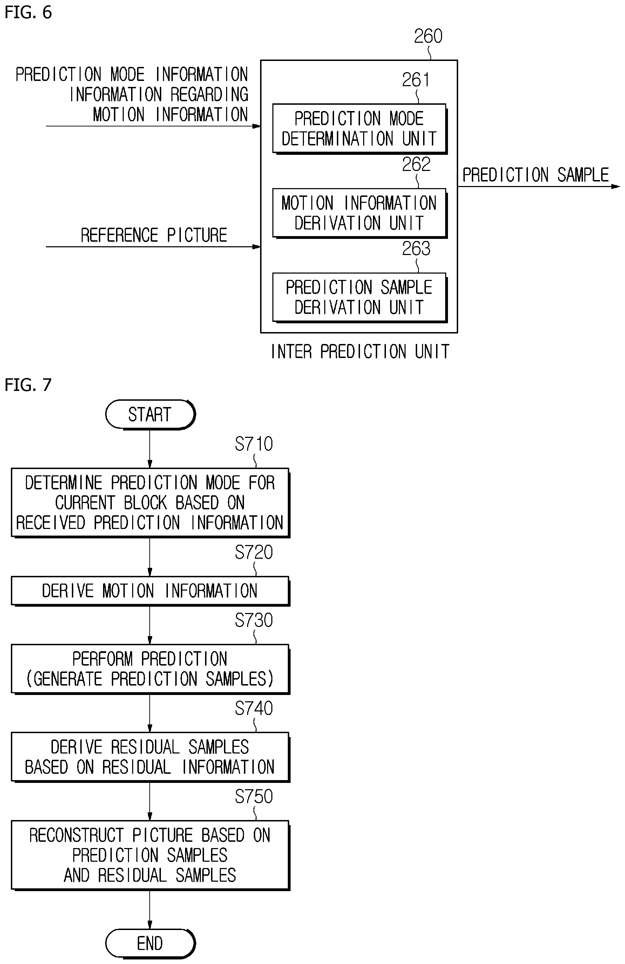

FIG. 6 is a diagram schematically showing the inter prediction unit 260 of the image decoding apparatus 200, and FIG. 7 is a flowchart showing a method of decoding an image based on inter prediction.

The image decoding apparatus 200 may perform the operation corresponding to the operation performed by the image encoding apparatus 100. The image decoding apparatus 200 may perform prediction on the current block on the basis of the received prediction information and may derive prediction samples.

Specifically, the image decoding apparatus 200 may determine a prediction mode for the current block on the basis of the received prediction information (S710). The image decoding apparatus 200 may determine which inter prediction mode is applied to the current block on the basis of the prediction mode information in the prediction information.

For example, on the basis of the merge flag, it may be determined whether the merge mode is applied to the current block or the (A)MVP mode is determined. Alternatively, one of various inter prediction mode candidates may be selected on the basis of the mode index. The inter prediction mode candidates may include a skip mode, a merge mode, and/or an (A)MVP mode, or may include various inter prediction modes described later.

The image decoding apparatus 200 may derive motion information of the current block on the basis of the determined inter prediction mode (S720). For example, when the skip mode or the merge mode is applied to the current block, the image decoding apparatus 200 may construct a merge candidate list described later, and may select one merge candidate among merge candidates included in the merge candidate list. The selection may be performed on the basis of the above-described selection information (a merge index). The motion information of the current block may be derived using the motion information of the selected merge candidate. The motion information of the selected merge candidate may be used as the motion information of the current block.

As another example, when the (A)MVP mode is applied to the current block, the image decoding apparatus 200 may construct an (A)MVP candidate list described later, and may use, as a motion vector predictor (mvp) of the current block, a motion vector of an mvp candidate selected among mvp candidates included in the (A)MVP candidate list. The selection may be performed on the basis of the above-described selection information (an mvp flag or an mvp index). In this case, the MVD of the current block may be derived on the basis of the information on the MVD, and the motion vector of the current block may be derived on the basis of the mvp of the current block and the MVD. In addition, a reference picture index of the current block may be derived on the basis of the reference picture index information. A picture indicated by the reference picture index in the reference picture list related to the current block may be derived as a reference picture that is referenced for inter prediction of the current block.

In the meantime, as will be described later, the motion information of the current block may be derived without constructing a candidate list. In this case, the motion information of the current block may be derived according to a procedure described in a prediction mode described later. In this case, the candidate list configuration as described above may be omitted.

The image decoding apparatus 200 may generate prediction samples for the current block on the basis of the motion information of the current block (S730). In this case, the reference picture may be derived on the basis of the reference picture index of the current block, and the prediction samples of the current block may be derived using samples of a reference block indicated on the reference picture by the motion vector of the current block. In this case, as described later, in some cases, a prediction sample filtering procedure may be further performed on all or some of the prediction samples of the current block.

For example, the inter prediction unit 260 of the image decoding apparatus 200 may include a prediction mode determination unit 261, a motion information derivation unit 262, and a prediction sample derivation unit 263. The prediction mode determination unit 181 may determine the prediction mode for the current block on the basis of received prediction mode information. The motion information derivation unit 182 may derive the motion information (a motion vector and/or a reference picture index) of the current block on the basis of received information on the motion information. The prediction sample derivation unit 183 may derive the prediction samples of the current block.

The image decoding apparatus 200 may generate residual samples for the current block on the basis of the received residual information (S740). The image decoding apparatus 200 may generate reconstructed samples for the current block on the basis of the prediction samples and the residual samples, and may generate, on the basis of this, a reconstructed picture (S750). Afterward, as described above, an in-loop filtering procedure may be further applied to the reconstructed picture.

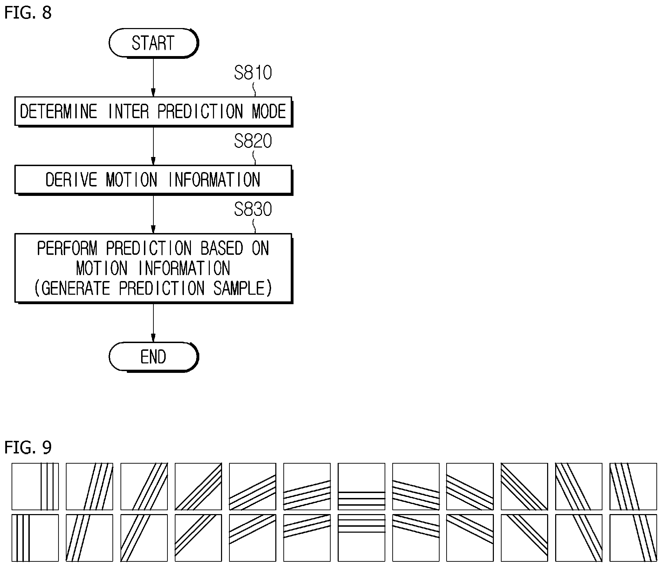

Referring to FIG. 8, the inter prediction procedure may include the steps of determining an inter prediction mode (S810), deriving motion information according to the determined prediction mode (S820), and performing prediction based on the derived motion information (generating a prediction sample)(S830). The inter prediction procedure may be performed in the image encoding apparatus 100 and the image decoding apparatus 200 as described above.

### Inter prediction mode determination

Various inter prediction modes may be used for prediction of the current block in the picture. For example, various modes, such as a merge mode, a skip mode, a motion vector prediction (MVP) mode, an affine mode, a subblock merge mode, and a merge with MVD (MMVD) mode, and the like may be used. A decoder side motion vector refinement (DMVR) mode, an adaptive motion vector resolution (AMVR) mode, a bi-prediction with CU-level weight (BCW), a bi-directional optical flow (BDOF), and the like may also be used as additional modes additionally or instead. The affine mode may be called an affine motion prediction mode. The MVP mode may be referred to as advanced motion vector prediction (AMVP) mode. In this document, some modes and/or motion information candidates derived by some modes may be included as one of motion information candidates of other modes. For example, an HMVP candidate may be added as a merge candidate in the merge/skip mode or may be added as an mvp candidate in the MVP mode.

Prediction mode information indicating the inter prediction mode of the current block may be signaled from the image encoding apparatus 100 to the image decoding apparatus 200. The prediction mode information may be included in the bitstream and received by the image decoding apparatus 200. The prediction mode information may include index information indicating one of a plurality of candidate modes. Alternatively, the inter prediction mode may be indicated through hierarchical signaling of flag information. In this case, the prediction mode information may include one or more flags. For example, a skip flag may be signaled to indicate whether a skip mode is applied, and if the skip mode is not applied, a merge flag may be signaled to indicate whether a merge mode is applied, and if the merge mode is not applied, it is indicated to apply an MVP mode or a flag for additional classification may be further signaled. The affine mode may be signaled in an independent mode or may be signaled in a mode dependent on the merge mode or the MVP mode. For example, the affine mode may include an affine merge mode and an affine MVP mode.

### Derivation of motion information

Inter prediction may be performed using motion information of the current block. The image encoding apparatus 100 may derive optimal motion information for the current block through a motion estimation procedure. For example, the image encoding apparatus 100 may search for a similar reference block having a high correlation in units of fractional pixels within a predetermined search range in the reference picture using the original block in the original picture for the current block, thereby deriving motion information. Similarity of blocks may be derived based on a difference of phase based sample values. For example, the similarity of the blocks may be calculated based on the SAD between the current block (or template of the current block) and the reference block (or template of the reference block). In this case, motion information may be derived based on a reference block having the smallest SAD in the search area. The derived motion information may be signaled to the image decoding apparatus 200 according to various methods based on the inter prediction mode.

### Generation of prediction sample

A predicted block for the current block may be derived based on motion information derived according to the prediction mode. The predicted block may include prediction samples (prediction sample array) of the current block. When the motion vector of the current block indicates a fractional sample unit, an interpolation procedure may be performed, through which prediction samples of the current block may be derived based on reference samples in the fractional sample unit within a reference picture. When affine inter prediction is applied to the current block, prediction samples may be generated based on a sample/subblock unit MV. When bi-prediction is applied, prediction samples derived through weighting or weighted averaging (according to phase) of prediction samples derived based on L0 prediction (that is, prediction using reference picture and MVL0 in reference picture list L0) and prediction samples derived based on L1 prediction (that is, prediction using reference picture and MVL1 in reference picture list L1) may be used as prediction samples of the current block. When bi-prediction is applied, if the reference picture used for L0 prediction and the reference picture used for L1 prediction are located in different temporal directions with respect to the current picture (i.e., bi-prediction and bidirectional prediction), it may be called true bi-prediction.

As described above, reconstructed samples and reconstructed pictures may be generated based on the derived prediction samples, and thereafter, a procedure such as in-loop filtering may be performed.

### GPM (Geometric Partitioning Mode)

FIG. 9 is a diagram illustrating GPM (Geometric Partitioning Mode) partitioning according to the present disclosure. GPM partitioning, i.e., geometric partitioning mode, is a mode that may be supported in prediction, is a type of merge mode along with other merges including sub-block merge mode, CIIP mode, MMVD mode, and general merge mode, and may be signaled as a CU level flag. The geometric partitioning mode may be supported for all CU sizes where m,n ∈{3···6} and w×h=2^m×2^n except for the sizes of 8x64 and 64x8, and a total of 64 partitions may be supported.

According to the geometric partitioning mode, a CU may be partitioned into two parts by a geometrically positioned straight line. The position of the partition line may be mathematically derived from the angle and offset parameter of a particular partition. The geometric partition of the CU, i.e., each part, may be inter-predicted using its own motion. Each partition is allowed to be subjected to only uni-prediction, and each part may be associated with one motion vector and one reference index. This constraint (uni-prediction motion) is to ensure that there are only two motion-compensated predictions for each CU, similar to bi-prediction. The uni-prediction motion for each partition is as described above.

FIG. 9 illustrates an example of GPM partitioning grouped by the same angle. If the geometric partitioning mode is used for a current CU, a geometric partition index indicating the partition mode (angle and offset) of the geometrically partitioned part and two merge indices (one for each partition) may be additionally signaled. The maximum number of GPM candidate sizes may be explicitly signaled in the SPS, and syntax binarization for the GPM merge indices may be specified.

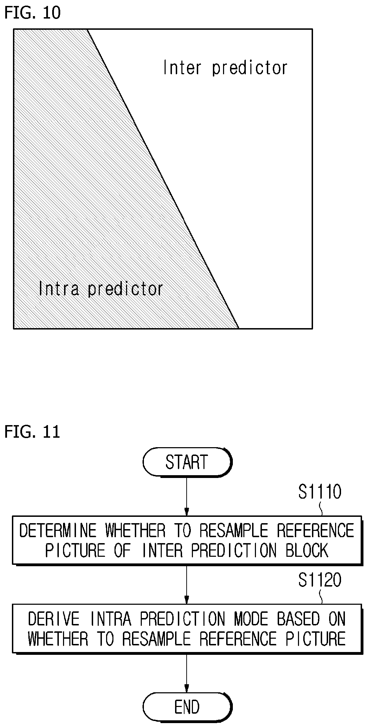

FIG. 10 is a diagram illustrating GPM intra/inter according to the present disclosure. If the GPM mode is applied, the syntax of Table 1 below may be signaled.

**[Table 1]**

| | |
|---|---|
| **merge_gpm_partition_idx[** x0 ][ y0 ] | ae(v) |
| **merge_gpm_idx0**[ x0 ][ y0 ] | ae(v) |
| if( MaxNumGpmMergeCand > 2 ) | |
| **merge_gpm_idx1[** x0 ][ y0 ] | ae(v) |

The angle and distance in Table 2 may be derived based on the signaled GPM index as in Table 1 above.

**Table 2]**

| **merge_gpm_partition_idx** | **0** | **1** | **2** | **3** | **4** | **5** | **6** | **7** | **8** | **9** | **10** | **11** | **12** | **13** | **14** | **15** |
|---|---|---|---|---|---|---|---|---|---|---|---|---|---|---|---|---|
| **angleIdx** | 0 | 0 | 2 | 2 | 2 | 2 | 3 | 3 | 3 | 3 | 4 | 4 | 4 | 4 | 5 | 5 |
| **distanceIdx** | 1 | 3 | 0 | 1 | 2 | 3 | 0 | 1 | 2 | 3 | 0 | 1 | 2 | 3 | 0 | 1 |
| **merge_gpm_partition_idx** | **16** | **17** | **18** | **19** | **20** | **21** | **22** | **23** | **24** | **25** | **26** | **27** | **28** | **29** | **30** | **31** |
| **angleIdx** | 5 | 5 | 8 | 8 | 11 | 11 | 11 | 11 | 12 | 12 | 12 | 12 | 13 | 13 | 13 | 13 |
| **distanceIdx** | 2 | 3 | 1 | 3 | 0 | 1 | 2 | 3 | 0 | 1 | 2 | 3 | 0 | 1 | 2 | 3 |
| **merge_gpm_partition_idx** | **32** | **33** | **34** | **35** | **36** | **37** | **38** | **39** | **40** | **41** | **42** | **43** | **44** | **45** | **46** | **47** |
| **angleIdx** | 14 | 14 | 14 | 14 | 16 | 16 | 18 | 18 | 18 | 19 | 19 | 19 | 20 | 20 | 20 | 21 |
| **distanceIdx** | 0 | 1 | 2 | 3 | 1 | 3 | 1 | 2 | 3 | 1 | 2 | 3 | 1 | 2 | 3 | 1 |
| **merge_gpm_partition_idx** | **48** | **49** | **50** | **51** | **52** | **53** | **54** | **55** | **56** | **57** | **58** | **59** | **60** | **61** | **62** | **63** |
| **angleIdx** | 21 | 21 | 24 | 24 | 27 | 27 | 27 | 28 | 28 | 28 | 29 | 29 | 29 | 30 | 30 | 30 |
| **distanceIdx** | 2 | 3 | 1 | 3 | 1 | 2 | 3 | 1 | 2 | 3 | 1 | 2 | 3 | 1 | 2 | 3 |

Based on the derived angle and distance, one block may be partitioned into two arbitrary regions. Each region constitutes an individual sub-block, and each prediction block may be generated using different motion prediction information. The prediction blocks generated in this way may be blended and used as prediction blocks of the corresponding block.

Although only inter prediction may be used to generate prediction blocks of each of the two sub-blocks, an embodiment of the GPM intra/inter blending method may use intra prediction to generate prediction blocks of each region. As an example, a prediction block may be generated for one region of the two sub-blocks using an intra prediction method, and a prediction block may be generated for the other region using an inter prediction method.

### Reference Picture Resampling (RPR)

Depending on the video compression technology, adaptive resolution change (ARC) of Coded Layer Video Sequence (CLVS) may be supported. If ARC is allowed, a reference picture having a different resolution from a current picture may be resampled. The reference picture may be a picture included in the same layer as a current layer including the current picture. The resampling may be referred to as reference picture resampling (RPR). For example, reference picture resampling may include a process of scaling and interpolating the reference picture.

If ARC is allowed, inter prediction may be performed based on a reference picture having a different resolution. The reference picture may have a different width and/or height of luma samples from the current picture. For inter prediction, the reference picture may be resampled. Prediction samples of the current block in the current picture may be derived based on the motion vector of the current block and the resampled reference picture.

In the present disclosure, a technique for referencing resampling information of a reference picture to generate a prediction block in GPM intra/inter prediction mode during inter prediction will be described. According to an embodiment of the present disclosure, motion information or intra prediction information of geometric partitioning (GPM) intra/inter prediction mode may be configured. Meanwhile, for clarity of explanation, it is assumed below that the geometric partitioning mode (GPM) is applied to a current block to partition it into two or more regions, and a first region, i.e., a first sub-block, and a second region, i.e., a second sub-block, are generated. As an example, the first sub-block and the second sub-block may be intra- or inter-predicted. In describing the embodiment below, it is assumed that GPM intra/inter is applied, and an intra prediction mode is applied to the first region, i.e., the first sub-block, and an inter prediction mode is applied to the second region, i.e., the second sub-block. However, in the case of embodiments based on other assumptions (for example, when GPM intra/intra is applied and intra prediction is applied to both the first and second regions), the above assumptions may not apply, in which case the other assumptions will be explained.

Meanwhile, in explaining one embodiment of the present disclosure, since the geometric partitioning mode may be supported in inter prediction, the reference picture list of the second sub-block to which the inter prediction mode is applied may be the reference picture list of the current block, and the reference picture of the second sub-block may be the reference picture of the current block.

Hereinafter, the embodiment of the present disclosure will be described in detail with reference to the drawings.

### Embodiment

FIG. 11 is a diagram illustrating a method of deriving an intra prediction mode of a geometrically partitioned block based on whether to resample a reference picture of the present disclosure.

For example, when a current block is geometrically partitioned to generate a first sub-block and a second sub-block, the first sub-block and the second sub-block may be predicted by either intra prediction or inter prediction to generate a prediction block. For example, when the first sub-block is intra-predicted and the second sub-block is inter-predicted, the second sub-block may be uni-predicted or bi-predicted, so that at least one reference picture of the second sub-block may exist. In order to derive the intra prediction mode of the first sub-block, whether to resample the reference picture of the inter prediction block, i.e., the second sub-block, may be determined (S1110). As another example, when both the first sub-block and the second sub-block are intra-predicted, whether to resample the reference picture may be determined (S1110) by using the reference picture as a collocated picture without referencing information on a motion vector. Whether Reference Picture Resampling (RPR) is performed may be derived from reference picture resampling information, which may include information related to the resolution of the reference sample. As an example, the reference picture resampling information may be included in a bitstream or derived from other information.

Upon determining whether to resample the reference picture, an intra prediction mode may be derived (S1120) based on whether to resample the reference picture. Here, the intra prediction mode may be for a geometrically partitioned block to be intra predicted, and may be for the first sub-block. As an example, the intra prediction mode may be derived by a specific process or may be derived to be a specific intra prediction mode depending on whether to resample the reference sample.

The intra prediction mode derived according to the embodiment of FIG. 11, i.e., the intra prediction mode, is stored in a buffer and may reference the intra prediction information of the current block in a block or picture to be decoded after the current block. In addition, according to one embodiment of the present disclosure, when performing geometric partitioning (GPM) intra/inter prediction, the intra prediction mode may be stored for a region where a prediction block is generated in the inter prediction mode, not for a region where a prediction block is generated in the intra prediction mode. In addition, when storing the intra prediction mode stored in a picture referenced by motion information of an inter prediction region as the intra prediction mode of the current region, whether to resample the reference picture may be referenced.

As an example, the method of FIG. 11 may be performed when an intra prediction mode is derived during image encoding of an image encoding apparatus or during image decoding of an image decoding apparatus. That is, it may be included in an image encoding method or an image decoding method.

According to an embodiment of the present disclosure, motion information or intra prediction information may be configured by referencing reference picture resampling information, and the configured prediction information may be stored, thereby improving compression efficiency.

Hereinafter, various embodiments of the present disclosure will be described in detail based on FIG. 11.

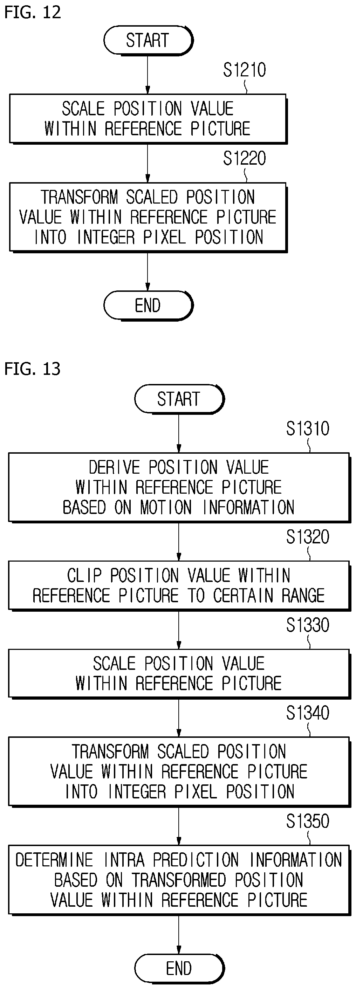

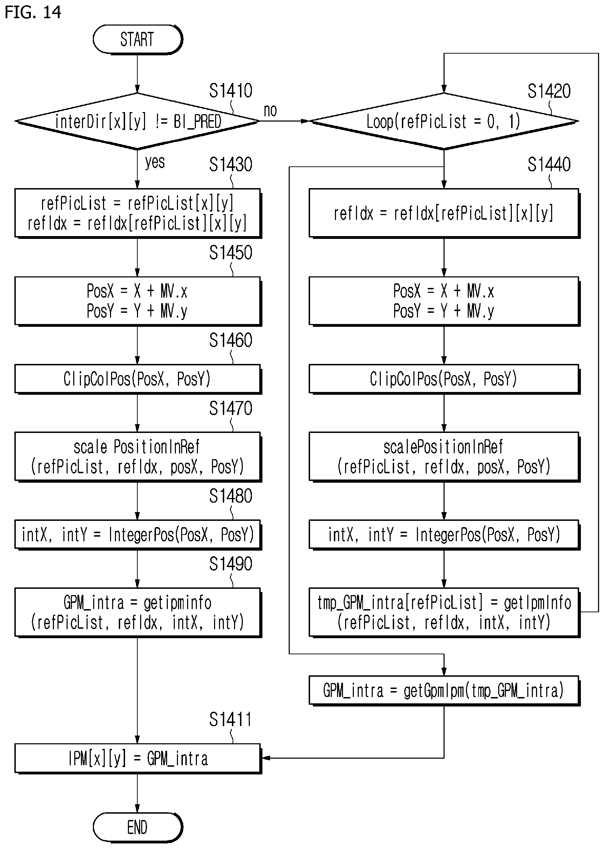

FIG. 12 is a diagram illustrating a method of deriving an intra prediction mode of a geometrically partitioned block when reference picture resampling is applied according to an embodiment of the present disclosure, and FIG. 13 is a diagram illustrating a method of deriving an intra prediction mode of a geometrically partitioned block when reference picture resampling is applied according to another embodiment of the present disclosure. In addition, FIG. 14 is a flowchart illustrating a method of deriving an intra prediction mode of a geometrically partitioned block when reference sample resampling is applied according to an embodiment of the present disclosure.

More specifically, FIGS. 12, 13 and 14 are all based on FIG. 11, but FIG. 13 is a diagram showing an embodiment that is more specific than FIG. 12. In addition, FIG. 14 is a flowchart illustrating an embodiment of the present disclosure based on FIG. 13.

The embodiments referring to FIGS. 12 to 14 may be based on determination of whether to resample a reference picture of an inter prediction block. As an example, FIGS. 12, 13 and 14 may be for a case where reference picture resampling is applied.

As an example, when reference sample resampling is applied, a prediction direction of a block may be determined (S1410) to derive an intra prediction mode of a geometrically partitioned block. As an example, if a block is an inter-predicted (sub-)block, a prediction direction may be a prediction direction of an inter-predicted (sub-)block (e.g., a second sub-block). Step S1410 may include a process of determining whether an inter prediction block is subjected to uni -prediction or bi-prediction, etc. In a case where an inter prediction block is subjected to uni-prediction, since only a single reference picture may exist, a process of deriving an intra prediction mode may be performed only for a single reference picture (e.g., steps S1430 and below). On the other hand, as another example, when a current block is subjected to bi-prediction, a process of deriving an intra prediction mode (e.g., steps S1440 and below) may be performed for each of reference picture list 0 and reference picture list 1 (S1420). Since there may be multiple reference pictures when an inter prediction block is bi-predicted (including bi-prediction), a process of deriving an intra prediction mode may be performed for each reference picture. That is, a loop may be applied (S1420).

For example, if an inter prediction block is not bi-predicted or is uni-predicted and only a single reference picture exists, a reference picture list may be determined to be one of List 0 and List 1, and a reference picture index indicating the reference picture may be determined (S1430). On the other hand, if an inter prediction block is bi-predicted, a reference picture index indicating a reference picture for each reference picture list (List 0 and List 1) may be determined (S1440). Meanwhile, as another example, there may be a case where motion information of a reference picture cannot be referenced. For example, this may be the case where both the first sub-block and the second sub-block are intra-predicted. In order to determine the reference picture, steps S1430 and/or S1440 may be replaced with a process of determining the reference picture to be a predefined reference picture. At this time, the reference picture may be derived from other information obtained from a bitstream, for example, the reference picture may be determined based on HLS (e.g., ph_collocated_ref_idx, ph_collocated_from_l0_flag).

When resampling is applied to a reference picture indicated by a reference picture index, a position value within the reference picture may be derived (S1450) based on the motion information of the inter prediction block, and this step may be the same as step S1310 of FIG. 13. The motion information of the inter prediction block is for the reference picture and may include motion vector information, and the motion vector information may include information on horizontal coordinates and vertical coordinates. As an example, the position value within the reference picture may be derived by adding motion vector information (e.g., MV.x, MV.y) to the position information (X, Y) for the current block (e.g., X+MV.x, Y+MV.y), and may be derived to be PosX, PosY (PosX = X+MV.x, PosY = Y+MV.y).

When the position value within the reference picture is derived, clipping may be applied to the position value (S1460). This step may be the same as step S1320 of FIG. 13. As an example, clipping may be based on a clipping function (e.g., ClipColPos). The clipping function may have information on the position value as a parameter, and according to the clipping function, the position value may be set within a certain range. For example, a clipping function (e.g., ClipColPos(PosX,PosY)) may be a function that clips the position value (e.g., PosX, PosY) within the reference picture to have a position value within a range from the left pixel of a unit (e.g., CTU), to which the current block belongs, to a position of Left Pixel + the size CTU_SIZE of the coding tree unit (CTU) + a minimum block size (e.g., minBlockSize(4)) and a range from a top pixel of the unit (e.g., CTU), to which the current block belongs, to a position of Top Pixel + the size CTU_SIZE of the coding tree unit + a minimum block size (e.g., minBlockSize(4)).

If the position value within the reference picture is clipped, scaling (S1470) based on a reference picture scaling ratio may be performed based on the application of reference picture resampling. This step may be the same as steps S1210 of FIG. 12 and S1330 of FIG. 13. As an example, the position within the reference picture may be scaled (S1470) in consideration of a reference picture scaling ratio, i.e., a resampling ratio. Step S1470 may be based on a scaling function (e.g., scalePositionInRef). As an example, the scaling function may have as parameters a reference picture list, a reference picture index, a position value of a block within a reference picture (e.g., PosX, PosY), etc. According to step S1470, based on a resampling ratio, i.e., a scaling ratio, of a reference picture indicated by a reference picture index in a reference picture list of an inter prediction block, the position value (e.g., posX, posY) within the reference picture may be scaled to a collocated position of the reference picture.

The scaled position values within the reference picture may be transformed into an integer pixel position (S1480). The position value in the reference picture may be expressed as precision of motion information and thus may be transformed into the integer pixel position. This step may be the same as step S1220 of FIG. 12 and step S1340 of FIG. 13. Step S1480 may be performed based on a transform function to the integer pixel position (e.g., integerPos), and the transform function may have the position value within the reference picture (e.g., PosX, PosY) as parameters, and may output the transformed position value (e.g., intX, intY).

Information on an intra prediction mode may be determined based on the transformed position value within the reference picture (S1490). This step may be the same as step S1350 of FIG. 13. The intra prediction information may be determined further based on a reference picture list and a reference picture index, and may be determined by a specific function (e.g., getIpminfo and/or getGpmIpm). Here, the function may mean a function that derives or determines intra mode information from a referenced picture among already decoded pictures, and may have a reference picture list, a reference picture index, an integer-transformed position value, etc. as parameters. Information on the determined intra prediction mode (e.g., GPM_intra) may be directly derived to be a final intra prediction mode and used for an intra prediction block (e.g., a first sub-block), or may be included in an IPM (Intra Prediction Modes) list for deriving a final intra prediction mode (S1411). For example, if an inter prediction block is bi-predicted, information on an intra prediction mode of a reference picture for each of List 0 and List 1 may be respectively determined and included in the IPM list (S1411). In addition, if the information on the intra prediction mode is determined by the above-described specific function (e.g., getIpminfo and/or getGpmIpm), information on the final geometric partitioning (GPM) intra prediction mode may be determined.

Referring to FIG. 12, the process of deriving the position value within the reference picture or the process of clipping the position value within the reference picture may not be performed. That is, only the process of scaling the position value within the reference picture (S1210) and the process of transforming the scaled position value within the reference picture into the integer pixel position (S1220) may be performed to derive the intra prediction mode of the geometrically partitioned block.

Referring to FIG. 13, the process of scaling the position value within the reference picture (S1330) may be the same as the process of scaling the position value within the reference picture (S1210) of FIG. 12, and may be performed after the process of deriving the position value within the reference picture (S1310) and the process of clipping the position value within the reference picture (S1320). In addition, the process of transforming the scaled position value within the reference picture into the integer pixel position (S1340) may be the same as the process of transforming into the integer pixel position of FIG. 12 (S1220). After the process of transforming the position (S1340), intra prediction information may be determined based on the transformed position value within the reference picture (S1350).

The processes of FIGS. 12 to 14 may be performed by an image encoding and decoding apparatus, and may be included in an image encoding method and an image decoding method. In addition, information or values described in the above embodiment may be signaled in a bitstream.

According to an embodiment of the present disclosure, quality can be improved during image encoding/decoding by considering whether to resample a reference picture during geometric partitioning intra/inter (GPM intra/inter) prediction.

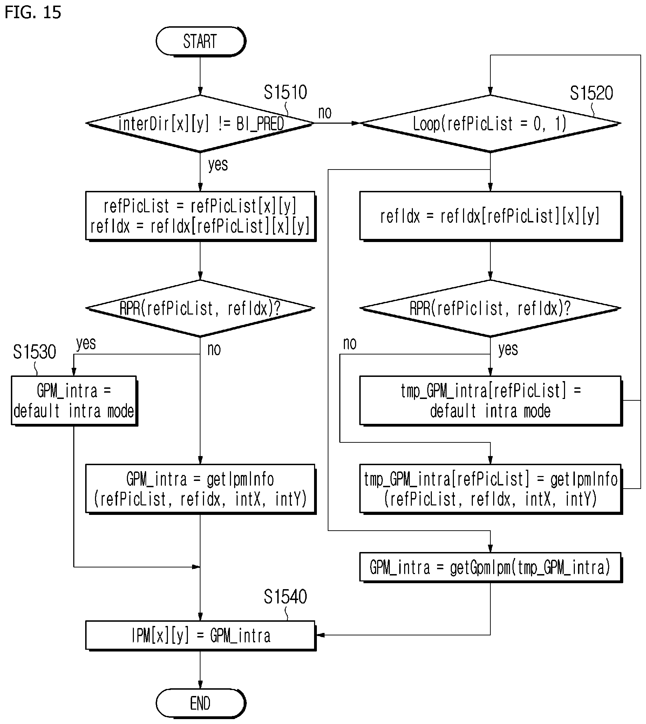

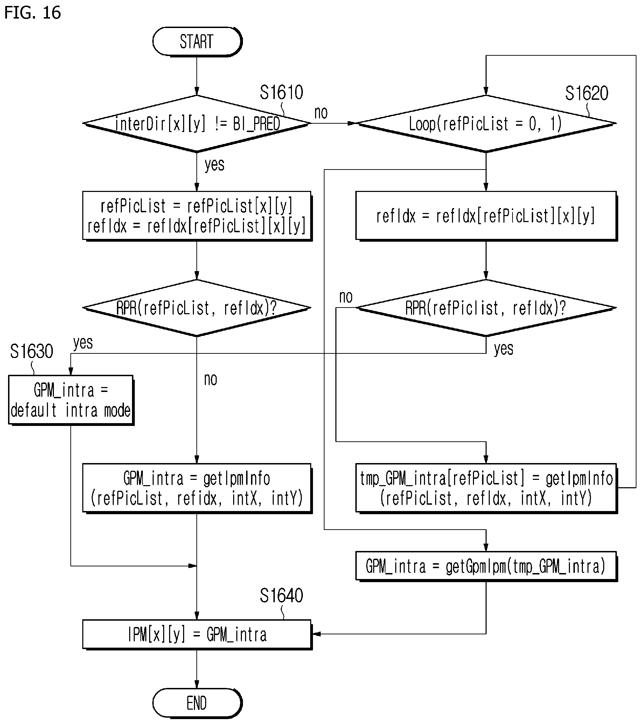

FIGS. 15 and 16 are flowcharts illustrating a method of deriving an intra prediction mode of a geometrically partitioned block based on a reference sample resampling scaling ratio according to another embodiment of the present disclosure. FIGS. 15 and 16 are both flowcharts of an embodiment based on FIG. 11.

The embodiments referring to FIGS. 15 and 16 may be based on determination of whether to resample a reference picture of an inter prediction block. As an example, FIGS. 15 and 16 may be for a case where reference picture resampling is applied.

Referring to FIGS. 15 and 16, as described with reference to FIG. 14, the prediction direction of the current block may be determined (S1510, S1610). Since this step is the same as the S1410 process of FIG. 14, a repeated description will be omitted. Similarly, on the other hand, when the current block is bi-predicted, a process of deriving an intra prediction mode for each of reference picture list 0 and reference picture list 1 (S1520, S1620) may be performed. That is, a loop may be applied (S1520, S1620). Since this step is the same as the S1420 process of FIG. 14, a repeated description will be omitted.

As an example, if a reference picture from which information on an intra prediction mode is to be derived is resampled, it is proposed to define a specific intra prediction mode (e.g., a default intra prediction mode) and derive the intra prediction mode of a geometrically partitioned block based on it, without obtaining information on the intra prediction mode from the reference picture.

Referring to FIGS. 15 and 16, if the reference picture is resampled, scaling is performed based on motion information to derive a collocated position within the reference picture and without deriving the intra prediction mode of the reference picture, a predefined default intra prediction mode may be used a geometric partitioning (GPM) intra prediction mode of a current sub-block.

Referring first to FIG. 15, when an inter prediction block is uni-predicted and a reference picture is resampled, a predefined default intra prediction mode may be derived to be the geometric partitioning intra (GPM intra) prediction mode of the current sub-block (S1530). The derived geometric partitioning intra prediction mode may be included in an intra prediction mode (IPM) list (S1540), and since this step is the same as S1450 of FIG. 14, a repeated description will be omitted. As another example, the default intra prediction mode may be directly determined to be a final intra prediction mode. Meanwhile, when the inter prediction block is bi-predicted, a predefined default intra prediction mode may be used depending on whether to resample the reference picture for each list (List 0 and List 1). That is, a loop may be applied (S1520).

Referring to FIG. 16, if the inter prediction block is bi-predicted and at least one of the reference pictures in each direction is subjected to reference picture resampling, the intra prediction mode for the geometrically partitioned block may be derived to be the default intra prediction mode (S1630) and may be included in the intra prediction mode (IPM) list (S1640). Meanwhile, since this step (S1640) is the same as S1450 of FIG. 14, a repeated description will be omitted. As another example, the default intra prediction mode may be directly determined to be the final intra prediction mode.

As an example, the default intra prediction mode may be any prediction mode, but as an example, may be one of PLANAR or DC mode.

According to one embodiment of the present disclosure, the derived intra prediction mode of the sub-block is stored in a buffer so that the intra prediction information of the current block may be referenced in a block or picture decoded after the current block.

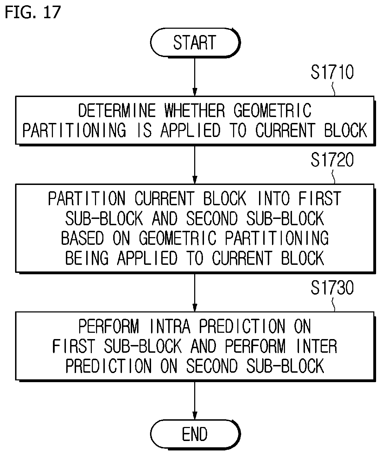

FIG. 17 is a flowchart illustrating an image encoding method or decoding method according to one embodiment of the present disclosure.

As an example, FIG. 17 may be performed by an image encoding apparatus or an image decoding apparatus, and may also be combined with other embodiments described above.

As an example, if FIG. 17 shows an image decoding method performed by an image decoding apparatus, whether to apply geometric partitioning (GPM) to a current block may be determined (S1710), and based on geometric partitioning being applied to the current block, the current block may be partitioned into a first sub-block and a second sub-block (S1720), and intra prediction may be performed on the first sub-block and inter prediction may be performed on the second sub-block (S1730). As an example, whether to apply geometric partitioning to the current block may be obtained from a bitstream.

As another example, if FIG. 17 shows an image encoding method performed by an image encoding apparatus, whether to apply geometric partitioning to a current block may be determined (S1710), and based on geometric partitioning being applied to the current block, the current block may be partitioned into a first sub-block and a second sub-block (S1720), and intra prediction may be performed on the first sub-block and inter prediction may be performed on the second sub-block (S1730). As an example, whether to apply geometric partitioning to the current block may be encoded into a bitstream.

Meanwhile, the intra prediction mode of the first sub-block may be derived based on the intra prediction mode of the collocated block within the reference picture and whether to resample the reference picture, where the reference picture may be for an inter prediction block (e.g., the current block and/or the second sub-block). As an example, if the reference picture is resampled, the collocated block may be derived based on a value clipped to a position within a certain range for the current block. In addition, the position within the certain range for the current block may be determined based on a coding tree unit size for the current block. In addition, if the reference picture is resampled, the collocated block may be derived based on scaling according to a sampling ratio of the reference picture. The collocated block may be derived by being transformed into an integer pixel position after scaling. If the reference picture is resampled, the intra prediction mode of the first sub-block may be derived based on a specific intra prediction mode. As an example, if the second sub-block is bi-predicted and at least one of the reference pictures is resampled, the intra prediction mode of the first sub-block may be derived based on a specific intra prediction mode. As another example, if the second sub-block is bi-predicted and only one of the reference pictures is not resampled, the intra prediction mode of the first sub-block may be derived based on the intra prediction mode of the collocated block of the reference picture that is not resampled and a specific intra prediction mode. As an example, the specific intra prediction mode may be one of the planar or DC mode.

Meanwhile, although not illustrated, a method of transmitting a bitstream generated by an image encoding method and a non-transitory computer-readable storage medium storing a bitstream generated by the image encoding method are also proposed. The image encoding method may include the image encoding method described above.

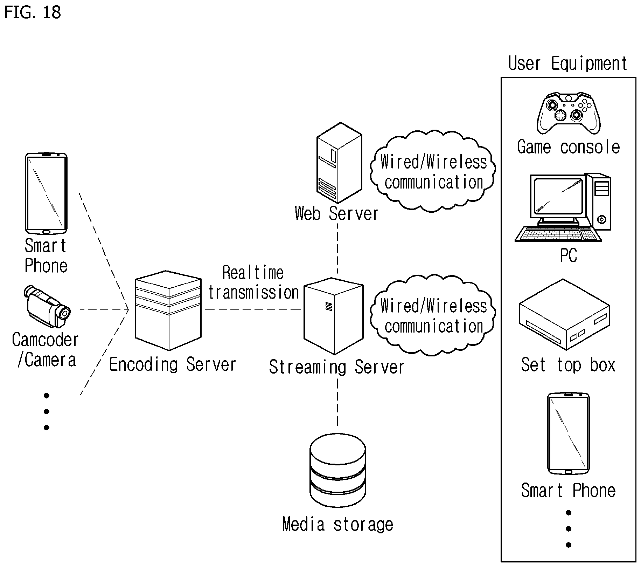

FIG. 18 is a view showing a content streaming system, to which an embodiment of the present disclosure is applicable.

As shown in FIG. 18, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

### Industrial Applicability

The embodiments of the present disclosure may be used to encode or decode an image.

## Claims

1. An image decoding method performed by an image decoding apparatus, the image decoding method comprising:
determining whether to apply geometric partitioning to a current block;
partitioning the current block into a firs sub-block and a second sub-block based on geometric partitioning being applied to the current block; and
performing intra prediction on the first sub-block and performing inter prediction on the second sub-block,
wherein an intra prediction mode of the first sub-block is derived based on an intra prediction mode of a collocated block within a reference block and whether to resample the reference picture.

2. The image decoding method of claim 1, wherein based on the reference picture being resampled, the collocated block is derived based on a value clipped to a position within a certain range for the current block.

3. The image decoding method of claim 2, wherein the position within the certain range for the current block is determined based on a coding tree unit size for the current block.

4. The image decoding method of claim 1, wherein based on the reference picture being resampled, the collocated block is derived based on scaling according to a sampling ratio of the reference picture.

5. The image decoding method of claim 4, wherein the collocated block is derived by being transformed into an integer pixel position after scaling.

6. The image decoding method of claim 1, wherein based on the reference picture being resampled, the intra prediction mode of the first sub-block is derived based on a specific intra prediction mode.

7. The image decoding method of claim 6, wherein the specific intra prediction mode is one of planar or DC mode.

8. The image decoding method of claim 1, wherein, based on the second sub-block being bi-predicted and at least one of the reference pictures being resampled, the intra prediction mode of the first sub-block is derived based on a specific intra prediction mode.

9. The image decoding method of claim 1, wherein based on the second sub-block being bi-predicted and only one of the reference pictures being not resampled, the intra prediction mode of the first sub-block is derived based on an intra prediction mode of a collocated block within the reference picture which is not resampled and a specific intra prediction mode.

10. An image encoding method performed by an image encoding apparatus, the image encoding method comprising:
determining whether to apply geometric partitioning to a current block;
partitioning the current block into a firs sub-block and a second sub-block based on geometric partitioning being applied to the current block; and
performing intra prediction on the first sub-block and performing inter prediction on the second sub-block,
wherein an intra prediction mode of the first sub-block is derived based on an intra prediction mode of a collocated block within a reference block and whether to resample the reference picture.

11. A method of transmitting a bitstream generated by an image encoding method, the image encoding method comprising:
determining whether to apply geometric partitioning to a current block;
partitioning the current block into a firs sub-block and a second sub-block based on geometric partitioning being applied to the current block; and
performing intra prediction on the first sub-block and performing inter prediction on the second sub-block,
wherein an intra prediction mode of the first sub-block is derived based on an intra prediction mode of a collocated block within a reference block and whether to resample the reference picture.

12. A non-transitory computer-readable storage medium storing a bitstream generated by the image encoding method of claim 10.
